# FASCICULE DE BREVET EUROPEEN

(11) **EP 0 937 690 B1**
(45) Date de publication et mention de la délivrance du brevet: **09.04.2003**
(21) Numéro de dépôt: 99400356.4
(22) Date de dépôt: 15.02.1999
(51) Int. Cl.: C03C 17/00, C03C 17/42, C03C 27/04

(54) **Procédé et dispositif de préparation d'une vitre de véhicule destinée à être assemblée à sa carrosserie par collage**
Verfahren und Vorrichtung zur Herstellung einer Fahrzeugverglasung zur Befestigung an seine Karosserie durch Verklebung
Process and apparatus for preparing a vehicle glazing to be mounted on its body by bonding

(30) Priorité: 24.02.1998 FR 9802191
(43) Date de publication de la demande: 25.08.1999
(73) Titulaire: Renault Automation Comau, 92365 Meudon La Forêt Cedex (FR)
(72) Inventeur: Thurier, Yvan, 94320 Thiais (FR)
(74) Mandataire: Robert, Jean-Pierre

(56) Documents cités:
- EP-A- 0 562 430
- US-A- 4 857 367
- US-A- 5 049 368
- US-A- 5 540 946

## Description

Les vitres d'un véhicule automobile maintenues par collage sur les bords d'une ouverture de carrosserie de véhicule, sont pourvues en bordure d'un revêtement sérigraphié dont le but est de masquer à la vue le joint de colle périphérique.

Les encres aujourd'hui utilisées sont en général cuites au four et on constate que leur qualité de barrière notamment à l'égard des rayons ultraviolets est insuffisante. Or le joint de colle, en général à base de polyuréthane, que cette sérigraphie est censée masquer, est très sensible aux rayons ultraviolets qui le dégradent.

Il a fallu donc remédier à cet inconvénient en prévoyant la mise en place d'un écran beaucoup plus efficace sur le bord des vitres de véhicule destinées à être collées sur la carrosserie. C'est ainsi qu'on applique sur la face de la vitre destinée à être en contact avec le joint, un revêtement primaire périphérique de largeur au moins égale à celle du joint, formant barrière aux rayons ultra-violets et couche d'amélioration du collage du joint.

Le revêtement est réalisé à partir d'un produit liquide contenant, dans des solvants, d'une part de la poudre de carbone et d'autre part un agent promoteur d'adhésivation. Aujourd'hui l'application d'un tel revêtement est soit, manuelle et donc par nature irrégulière soit, réalisée par pulvérisation et essuyage (voir document EP 0 562 430) avec des moyens compliqués et fragiles de contrôle de la quantité de produit pulvérisé qui opèrent avant essuyage, lequel modifie de manière non maitrisée les paramètres du revêtement final. On a cherché à réaliser une application automatique au moyen d'un dispositif qui permette un contrôle simple et fiable de l'opération afin d'être certain de la présence sur le bord de la vitre d'un revêtement régulier.

A cet effet l'invention a pour premier objet un procédé de préparation d'une vitre de véhicule automobile destinée à être rapportée par collage périphérique sur la carrosserie d'un véhicule portant sur l'une de ses faces une marge périphérique pourvue d'un motif sérigraphié de masquage du joint de colle qui consiste d'une part, à appliquer par pulvérisation une couche périphérique de produit barrière aux rayons UV sur la surface de la vitre portant la sérigraphie et d'autre part à contrôler et vérifier l'application selon la partie caractérisante de la revendication 1.

La procédé selon l'invention est remarquable d'abord par le fait qu'on a choisi de réaliser le film par simple pulvérisation au lieu de mécaniser la méthode manuelle d'application qui s'opère au moyen d'un tampon. Des essais ont en effet montré qu'une telle mécanisation ne permettait pas d'obtenir une couche de revêtement primaire satisfaisante. Pour qu'une application par pulvérisation soit satisfaisante il a fallu l'associer à un système de contrôle de la régularité du débit du produit délivré par la tête de pulvérisation. En effet comme on maîtrise correctement la vitesse relative de la vitre et de la tête, cette régularité est le facteur de la régularité de l'épaisseur du revêtement déposé donc de la constance sur la totalité du périmètre de la vitre, de l'effet d'écran aux ultraviolets. Ce contrôle est d'autant plus nécessaire que le liquide à pulvériser est complexe et notamment chargé de particules et que la pulvérisation n'est pas continue puisque par hypothèse, l'application du revêtement primaire s'opère sur des pièces discrètes, avec précision et le long d'un parcours fermé.

Pour faciliter cette régularité d'application, le procédé de l'invention prévoit en outre l'entretien d'une circulation du produit dans un circuit reliant un doseur à une tête de pulvérisation dans les périodes pendant lesquelles cette tête est isolée de ce circuit.

Le procédé de l'invention est également remarquable par le fait qu'il comporte un contrôle a posteriori de la qualité du revêtement réalisé, pour détecter les défauts du revêtement qui ne seraient pas dus qu'à la pulvérisation mais également à d'autres facteurs tels qu'une défaillance dans le mouvement relatif de la buse et de la vitre. On notera que la mesure de la capacité d'écran au rayonnement ultraviolet est réalisée par la mesure de la transmissivité d'un rayonnement infrarouge. On s'est en effet aperçu qu'il existait une corrélation directe entre la capacité de barrière au rayonnement infrarouge et celle au rayonnement ultraviolet. Cette constatation est particulièrement avantageuse car il existe sur le marché des sources de rayonnement infrarouge peu coûteuses et de bonne qualité contrairement aux sources de rayonnement ultraviolet qu'il aurait fallu développer de manière spécifique et qui auraient eu en tout état de cause un encombrement infiniment plus important que les sources de rayonnement infrarouge. En effet, ces dernières se réduisent à des diodes électroluminescentes pouvant émettre des puissances relativement importantes.

Un second objet de l'invention réside dans un dispositif pour mettre en oeuvre le procédé ci-dessus, dispositif qui comporte un poste de réalisation par pulvérisation du revêtement périphérique et un poste de contrôle de la qualité de ce revêtement en ce qui concerne son aptitude à faire écran aux rayons ultraviolets, ces postes étant desservis par des moyens de transport, de maintien et de manipulation de la vitre entre chacun de ces postes et à l'intérieur de chacun de ceux-ci. On a, dans ce dispositif, en effet séparé le poste de contrôle du poste de pulvérisation pour éviter que le poste de contrôle ne soit souillé par les projections pouvant émaner du poste de pulvérisation. Si les mesures effectuées au poste de contrôle ne sont pas satisfaisantes, on élimine la pièce de la chaîne de montage et on procède à une intervention sur le poste précédent pour identifier et remédier au défaut constaté.

Plus précisément dans le dispositif susdit, le poste de réalisation du revêtement comprend une buse fixe de pulvérisation montée en bout d'une conduite de soutirage d'un circuit fermé comprenant en série un réservoir, un circulateur, un premier obturateur, un dispositif de dosage à débit contrôlé, un embranchement de la conduite de soutirage, un second obturateur, la conduite de soutirage étant équipée également d'un obturateur. Cette disposition en boucle fermée du circuit d'alimentation de la buse de pulvérisation est avantageuse car elle permet de maintenir en circulation le plus longtemps possible le liquide à pulvériser, qui est un liquide chargé ayant tendance à se stratifier par décantation s'il n'était pas maintenu en mouvement. Plus précisément encore, le dispositif de dosage est formé par une pompe à membrane à commande hydraulique dans laquelle la variation de cylindrée est directement proportionnelle à la course d'un piston de la commande hydraulique, le contrôle du débit de ce dispositif étant réalisé par le contrôle de l'allure de la course de refoulement dudit piston.

De manière préférée, le circuit fermé est pressurisé et le piston de la commande hydraulique du dispositif de dosage est soumis à un effort constant de rappel en direction de la membrane.

Enfin, le poste de contrôle du revêtement comprend un support en fourche entre les branches de laquelle le robot fait défiler le bord revêtu de la vitre, l'une des branches étant équipée d'un émetteur d'impulsions de rayonnement infrarouge tandis que l'autre est pourvue en regard de l'émetteur, d'un récepteur du rayonnement transmis par le revêtement. Le poste de contrôle est ainsi construit de manière semblable à des postes usuels en matière de construction automobile à savoir des postes de soudage par points dans lesquels la pince à souder est fixe et la pièce qu'il convient de traiter est manipulée par un robot entre les mâchoires de cette pince.

D'autres caractéristiques et avantages de l'invention ressortiront de la description donnée ci-après à titre d'exemple purement indicatif.

Il sera fait référence aux dessins annexés parmi lesquels :
- la figure 1 est une vue partielle en coupe d'une vitre selon l'invention collée sur un bord d'ouverture de carrosserie,
- la figure 2 illustre le dispositif de l'invention destiné à mettre en oeuvre la préparation de la vitre susdite,
- la figure 3 est un schéma du circuit d'alimentation de la buse de pulvérisation mise en oeuvre dans le dispositif précédent,
- la figure 4 est une représentation de détail du dispositif de dosage mis en oeuvre dans le circuit de la figure 3,
- la figure 5 est une vue en coupe du dispositif de contrôle du revêtement réalisé par pulvérisation.

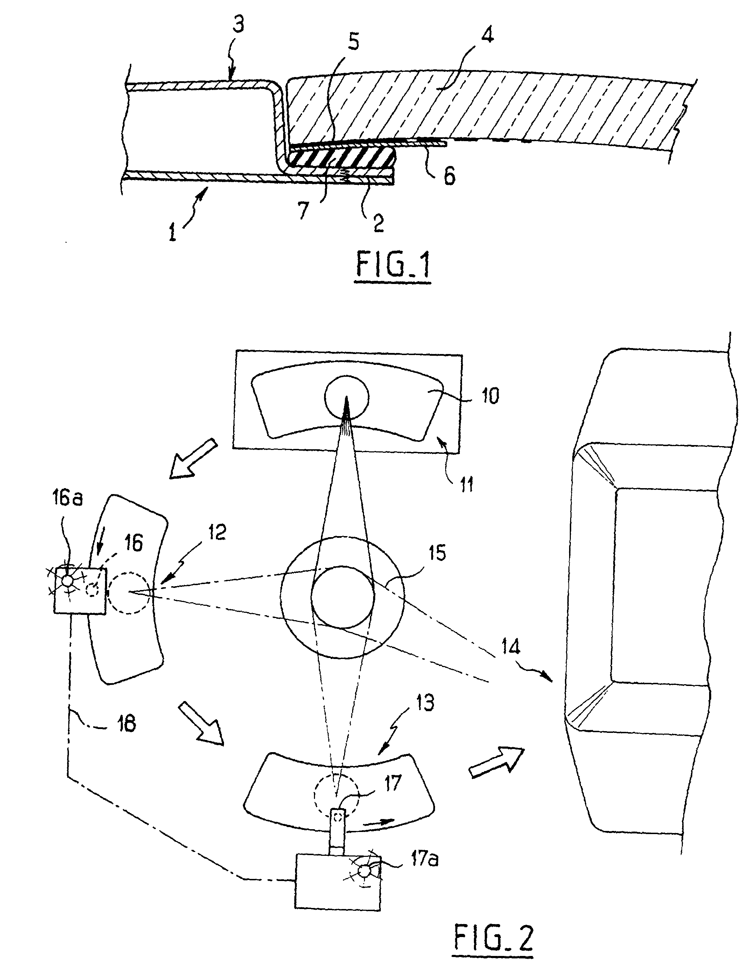

A la figure 1, on a représenté une partie de carrosserie 1 de véhicule automobile qui présente une aile 2 en retrait par rapport à une surface de peau 3, de manière à pouvoir accueillir une vitre 4, celle-ci devant être affleurante avec la peau 3 de la carrosserie. La vitre 4 possède sur sa face intérieure un revêtement périphérique 5 sérigraphié, connu en lui-même, qui est réalisé par le fournisseur de la vitre. Ce revêtement consiste en général en une encre appliquée par sérigraphie sur une marge périphérique de la vitre 4, cette encre étant cuite au four pour assurer la pérennité de sa fixation sur la vitre.

La vitre 4 possède également sur sa face sérigraphiée une seconde marge revêtue 6, ce revêtement étant formé d'un produit dont la fonction est d'une part de constituer une couche primaire pour favoriser l'adhérence de l'adhésif 7 destiné à réaliser la liaison entre la vitre 4 et l'aile 2 de la carrosserie 1 et, d'autre part, pour former une barrière efficace au rayonnement ultraviolet dont les effets sont nuisibles à la tenue dans le temps et au vieillissement de l'adhésif 7 qui est en général un polyuréthane.

La figure 2 est une vue de dessus schématique d'un poste de préparation d'un pare-brise 10 qui comporte un premier poste 11 de présentation des pare-brises, un second poste 12 de réalisation du revêtement 6 par pulvérisation, un troisième poste 13 de contrôle de la qualité du revêtement et un quatrième poste 14 de pose du pare-brise sur la carrosserie du véhicule. Un robot 15 constitue l'organe de convoyage du pare-brise et de maintien en position et de déplacement contrôlé de ce pare-brise dans chacun des postes 12 et 13. Le poste 12 possède un dispositif de pulvérisation contrôlée 16 d'une couche de produit 6 à la périphérie du pare-brise pour réaliser une marge de largeur au moins égale à la largeur du joint 7 de collage du pare-brise sur la carrosserie. Ce dispositif 16 possède un émetteur 16a d'un signal d'alerte pour un opérateur lorsqu'il se produit une anomalie au cours de la pulvérisation. Le poste 13 possède un dispositif 17 pour le contrôle de l'efficacité de la fonction barrière que forment ensemble le film 6 et la sérigraphie 5 à l'égard des ultraviolets. Ce dispositif 17 comporte également un émetteur 17a d'un signal d'alerte pour un opérateur lorsque le contrôle réalisé fait apparaître un revêtement défectueux. Dans le poste 12, le pare-brise 10 est déplacé par rapport au dispositif de pulvérisation qui est fixe, au moyen du robot 15 qui est programmé à cet effet. Dans le poste 13, il est possible de déplacer la marge du pare-brise de manière continue pour procéder à un contrôle multiple. En pratique, on s'est aperçu qu'un contrôle en deux points pouvait suffire, ce qui permet de réduire le temps nécessaire à ce contrôle. Le dispositif de contrôle 17 opère par impulsions. La mesure effectuée par le dispositif de contrôle 17 est comparée avec un seuil déterminé qui a été obtenu expérimentalement par ailleurs. Selon le résultat de cette comparaison, l'organe d'alerte 17a est ou non actionné pour qu'un opérateur puisse retirer le pare-brise défectueux si nécessaire.

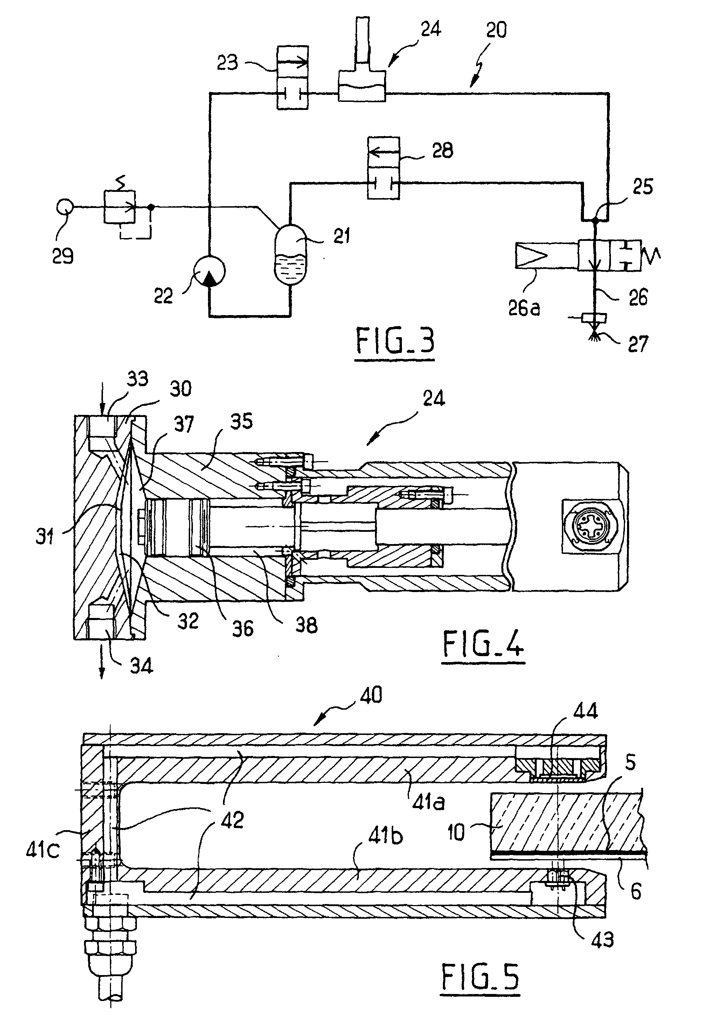

La figure 3 illustre par un schéma le dispositif de pulvérisation mis en oeuvre au poste 12. Ce dispositif comporte un circuit fermé 20 reliant, en série, un réservoir 21, une pompe de circulation ou circulateur 22, un premier obturateur commandable 23, un doseur 24, un embranchement 25 d'un conduit de soutirage 26 terminé par un pulvérisateur 27, et un second obturateur commandable 28. Le réservoir 21 est relié à une source de pressurisation 29 du circuit 20 tandis que le conduit 26 possède un troisième obturateur commandable 26a. Les obturateurs 23, 28 et 26a peuvent être constitués par des électrovannes pilotées. Le doseur 24 est constitué par tout dispositif volumétrique dont on peut contrôler le débit et notamment par un dispositif à diaphragme, genre pompe à membrane à commande hydraulique comme illustré plus en détail à la figure 4.

Le dispositif de dosage 24 représenté à la figure 4 se présente comme une pompe à membrane à commande hydraulique c'est-à-dire comportant une tête de travail 30 dans laquelle une chambre 31 à volume variable est délimitée par une membrane 32. Cette chambre 31 possède un orifice d'admission 33 et un orifice d'échappement 34. De l'autre côté de la membrane 32 qui est déformable non élastiquement (en polytétrafluoréthylène par exemple) le corps de pompe 35 délimite avec un piston 36 qui y coulisse, une chambre hydraulique 37 de volume fixe. Le volume balayé par le piston lors de sa course correspond à la variation de volume de la chambre de travail du dispositif. Comme le volume balayé par le piston 36 est un volume de section constante, la variation de volume de la chambre de travail est en relation directe avec le déplacement du piston. Ainsi une variation linéaire du volume de la chambre de travail en fonction du temps correspondra à un déplacement du piston à vitesse uniforme. En d'autres termes, en fermant l'admission 33 de la chambre 31 et en imposant au piston 36 un déplacement à vitesse constante en direction de la membrane, le doseur délivre un débit constant au travers de son orifice d'échappement 34. De la même manière, si on applique une force au piston 36 en direction de la membrane pour refouler le fluide contenu dans la chambre 31, l'admission étant fermée, il suffit de contrôler que la vitesse de déplacement du piston est uniforme pour être assuré d'un débit constant au travers de l'orifice 24. Dans le cas de l'invention, le dispositif de contrôle de la pulvérisation est assuré par un capteur (par exemple un potentiomètre) qui délivre un signal proportionnel au déplacement du piston, lequel échantillonné à intervalles de temps réguliers permet de calculer sa vitesse pour chaque intervalle et donc d'en vérifier la variation ou la constance. Si la constance n'est pas respectée (dans une plage de tolérances déterminée) l'émetteur d'alerte 16a est activé.

La force appliquée au piston est une pression pneumatique constante régnant dans la chambre 38 à l'arrière du piston, cette chambre étant reliée à une source de pression non représentée.

Le fonctionnement du dispositif s'opère de la manière suivante. Pendant les phases d'attente, les obturateurs 23 et 28 sont ouverts, le circulateur est en fonctionnement, tandis que l'obturateur 26a est fermé. Le fluide circule donc en circuit fermé dans le circuit 20. La pression du fluide dans ce circuit est déterminée par la pressurisation imposée au réservoir 21. C'est pendant cette phase que la chambre de travail 31 du doseur 24 se remplit. En effet la pression du fluide est telle que la pression dans la chambre de travail donc dans la chambre hydraulique 37, engendre une force sur le piston 36 supérieure à celle qu'il reçoit de la pression pneumatique dans la chambre 38. Le piston de ce doseur est arrêté au point mort arrière de sa course. Lorsqu'un pare-brise est prêt à être pourvu du revêtement périphérique, on commande la fermeture de l'obturateur 28 et on ferme ensuite l'obturateur 23 et la pulvérisation du revêtement s'opère en ouvrant l'obturateur 26a, ce qui permet le refoulement du liquide contenu dans le doseur. A la fin de la pulvérisation, on ferme la vanne 26a et on ouvre les vannes 28 et 23 pour remplir le doseur (ou permettre son remplissage) et faire circuler le fluide.

Dans une variante de réalisation du dispositif de pulvérisation de la figure 3, le circuit fermé 20 n'est pas pressurisé. Dans ce cas le fonctionnement légèrement modifié, s'opère de la manière suivante. A la fin de chaque phase d'attente, on commence par fermer l'obturateur 28. La pompe de circulation 22 fonctionnant en continu gave la portion de circuit 20 entre elle et l'obturateur 28, en remplissant le doseur 24. Avant la pulvérisation, on ferme l'obturateur 23 et on ouvre celui 26a de la conduite 26 qui est alors alimentée par le doseur. En fin de pulvérisation, on ferme l'obturateur 26a et on ouvre les deux obturateurs 23 et 28 pour autoriser la circulation du fluide dans le circuit fermé jusqu'à la nouvelle opération de pulvérisation.

La figure 4 est une vue en coupe du dispositif de contrôle de la transmission du rayonnement au travers du bord du pare-brise revêtu. Ce dispositif est en forme d'une fourche 40 dont les branches 41a, 41b et le fond 41c sont pourvus de canaux 42 pour le passage de liaison câblée destinés à relier d'une part à un émetteur 43 de rayonnement infrarouge et d'autre part un capteur 44 de ce rayonnement (une matrice de caméra CCD ou toute cellule appropriée) à une unité électronique d'exploitation. On notera que l'émetteur 33 est situé du côté de la face inférieure du pare-brise, c'est-à-dire celle qui n'a pas reçu de pulvérisation. Cette disposition permet de préserver autant que faire se peut cet émetteur de souillures pouvant provenir du revêtement fraîchement déposé.

Dans l'exemple de la figure 2, le préhenseur du robot 15 coopère avec la face concave du pare-brise, c'est-à-dire de sa face intérieure et maintient ce pare-brise dans les postes 12 et 13 orienté de manière qu'il tourne sa face concave (intérieure) vers le haut. Au cas où au contrôle le pare-brise est considéré comme défectueux, soit celui-ci est ramené au poste de pulvérisation pour subir un deuxième passage, soit il est purement et simplement extrait de la ligne de fabrication pour y être réintroduit postérieurement. Le schéma de la figure 2 n'est qu'un exemple possible de réalisation d'une installation de préparation d'un pare-brise conformément à l'invention, d'autres dispositifs de convoyage et d'autres postes de traitement le long de ce dispositif de convoyage pouvant être mis en oeuvre sans sortir du cadre de cette invention.

En particulier, dans un souci de gain d'encombrement, on peut prévoir de procéder à la pulvérisation et au contrôle des pare-brises maintenus verticalement, la texture du liquide pulvérisé permettant d'être appliqué sur une surface verticale sans créer de coulures et son séchage est rapide.

## Revendications

1. Procédé de préparation d'une vitre de véhicule automobile destinée à être rapportée par collage périphérique sur la carrosserie (1) du véhicule, comportant sur une face une marge périphérique recouverte d'un motif (5) sérigraphié de masquage du joint de colle (7), consistant à appliquer par pulvérisation une couche périphérique (6) de produit barrière aux rayons ultraviolets sur la surface de la vitre (4) portant la sérigraphie (5), **caractérisé en ce qu'**il consiste à assurer la régularité de la couche déposée par le contrôle, pendant la pulvérisation, de la régularité du débit de produit délivré à un organe de pulvérisation, et à émettre un signal d'alerte en cas de constatation de non régularité de ce débit et **en ce qu'**il consiste à vérifier, après pulvérisation, la capacité d'écran au rayonnement ultraviolet du revêtement (6) pulvérisé par la mesure de la transmission d'un rayonnement infrarouge au travers de la couche déposée en au moins un point de celle-ci et à comparer cette mesure à une valeur de seuil prédéterminée pour émettre un signal d'alerte au cas où le résultat de la comparaison est défavorable.

2. Dispositif pour mettre en oeuvre le procédé selon la revendication 1, **caractérisé en ce qu'**il comprend un poste (12) de pulvérisation avec des moyens pour assurer la régularité de la couche déposée par le contrôle, pendant la pulvérisation, de la régularité du débit de produit délivré à un organe de pulvérisation, et à émettre un signal d'alerte en cas de constatation de non régularité de ce débit et **en ce qu'**il comprend un poste (13) de contrôle avec des moyens pour vérifier, après pulvérisation, la capacité d'écran au rayonnement ultraviolet du revêtement (6) pulvérisé par la mesure de la transmission d'un rayonnement infrarouge au travers de la couche déposée en au moins un point de celle-ci et à comparer cette mesure à une valeur de seuil prédéterminée pour émettre un signal d'alerte au cas où le résultat de la comparaison est défavorable.

3. Dispositif selon la revendication 2, **caractérisé en ce que** le poste de pulvérisation (12) comprend avec une buse (27) de pulvérisation montée en bout d'une conduite de soutirage (26) d'un circuit fermé (20) comprenant en série un réservoir (21), un circulateur (22), un premier obturateur commandé (23), un dispositif de dosage (24), un embranchement (25) de la conduite de soutirage (26), un second obturateur (28) commandé, la conduite de soutirage (25) étant équipée également d'un obturateur commandé (26a), le dispositif de dosage (24) étant formé par une pompe à membrane (32) à commande hydraulique dans laquelle la variation de cylindrée est directement proportionnelle à la course d'un piston (36) de la commande hydraulique, le contrôle du débit de la buse étant réalisé par un organe de contrôle de l'allure de la course de refoulement de ce piston (36).

4. Dispositif selon la revendication 3, **caractérisé en ce que** le circuit fermé (20) est pressurisé et **en ce que** le piston (36) de la commande hydraulique du dispositif de dosage (24) est soumis à un effort constant de rappel en direction de la membrane inférieur à l'effort exercé sur la membrane par le produit pressurisé dans le circuit fermé lorsque la buse de pulvérisation est isolée.

5. Dispositif selon l'une des revendications 2 à 4, **caractérisé en ce que** le poste (13) de contrôle du revêtement comprend un support (40) en fourche dont les branches (41a, 41b) espacées définissent un espace de passage pour le bord revêtu de la vitre 19, l'une des branches étant équipée d'un émetteur (43) d'impulsion de rayonnement infrarouge, l'autre étant pourvue en regard de l'émetteur (43) d'un récepteur (44) de rayonnement transmis au travers du revêtement.

6. Dispositif selon l'une quelconque des revendications 2 à 5, **caractérisé en ce que**, chaque poste (12, 13) étant fixe, il comporte des moyens (15) de transport de maintien et de manipulation de la vitre entre chaque poste et à l'intérieur de chacun d'eux.

## Claims

1. A method of preparing a motor vehicle window for fitting to the bodywork (1) of the vehicle by peripheral adhesive, the window having a peripheral margin on one face that is covered in a silkscreen-printed pattern (5) masking the adhesive joint (7), the method consisting in spraying a peripheral layer (6) of ultraviolet radiation barrier material onto the surface of the glass (4) carrying the silkscreen printing (5), and being **characterized in that** it consists in ensuring that the deposited layer is regular by monitoring the regularity of the rate at which said material is delivered to a sprayer member during spraying, and in emitting a warning signal if it is observed that this rate of flow is not regular, and **in that** it consists, after spraying, in verifying the ultraviolet radiation screening capacity of the sprayed coating (6) by measuring the transmission of infrared radiation through the deposited layer at at least one point thereof and in comparing this measurement with a predetermined threshold value, in order to emit a warning signal if the result of the comparison is unfavorable.

2. Apparatus for implementing the method of claim 1, **characterized in that** it comprises a spray station (12) having means for ensuring that the deposited layer is regular by acting during spraying to monitor the regularity of the rate at which the material is delivered to a sprayer member, and emitting a warning signal if it is observed that this rate of flow is not regular, and **in that** it further comprises a monitoring station (13) with means for verifying, after spraying, the ultraviolet radiation screening capacity of the sprayed coating (6) by measuring the transmission of infrared radiation through the deposited layer at at least one point thereof and in comparing the measurement with a predetermined threshold value in order to emit a warning signal if the result of the comparison being unfavorable.

3. Apparatus according to claim 2, **characterized in that** the spraying station (12) comprises a spray nozzle (27) mounted at the end of a tapping pipe (26) for tapping from a closed circuit (20) comprising in series: a tank (21); a circulator (22); a first controlled valve (23); a metering device (24); a branch connection (25) to the tapping pipe (26); and a second controlled valve (28); the tapping pipe (25) also being fitted with a controlled valve (26a), the metering device (24) being formed by a diaphragm pump (32) under hydraulic control in which variation in cylinder capacity is directly proportional to the stroke of a hydraulic control piston (36), the flow rate of the nozzle being controlled by a member for controlling the speed of the delivery stroke of said piston (36).

4. Apparatus according to claim 3, **characterized in that** the closed circuit (20) is pressurized and **in that** the piston (36) of the hydraulic control for the metering device (24) is subjected to a constant return force towards the diaphragm that is less than the force exerted on the diaphragm by the pressurized material in the closed circuit when the spray nozzle is isolated.

5. Apparatus according to any one of claims 2 to 4, **characterized in that** the station (13) for monitoring the coating comprises a fork-shaped support (40) having spaced-apart tines (41a, 41b) defining a gap in which the coated edge of the window (19) passes, one of the tines being fitted with an infrared radiation pulse emitter (43) and the other being provided, facing the emitter (43), with a receiver (44) for receiving radiation that has been transmitted through the coating.

6. Apparatus according to any one of claims 2 to 5, **characterized in that** each station (12, 13) is stationary, and the apparatus has transport means (15) for holding and handling the window between the stations and within each of them.

## Patentansprüche

1. Verfahren zur Herstellung einer Fensterscheibe für ein Kraftfahrzeug, die dazu bestimmt ist, an der Karosserie (1) des Fahrzeuges durch Verklebung entlang dem Umfang angebracht zu werden, und die auf einer Seitenfläche einen Umfangsrand hat, der mit einem siebgedruckten Muster (5) zur Abdeckung der Klebeverbindung (7) überzogen ist, bestehend aus dem Aufbringen einer Umfangsschicht (6) aus einem ultraviolette Strahlen sperrenden Produkt auf die Oberfläche der den Siebdruck (5) tragenden Fensterscheibe (4) mittels Aufsprühen, **dadurch gekennzeichnet, daß** es darin besteht, daß die Gleichmäßigkeit der aufgebrachten Schicht gewährleistet wird, indem während des Aufsprühens die Gleichmäßigkeit des Durchsatzes des einem Sprühgerät zugeführten Produktes kontrolliert wird, und im Falle des Feststellens einer Ungleichmäßigkeit dieses Durchsatzes ein Warnsignal abgegeben wird, und daß es darin besteht, daß nach dem Aufsprühen die Abschirmungsleistung gegen ultraviolette Strahlung des aufgesprühten Überzuges (6) überprüft wird, indem die Transmission infraroter Strahlung durch die aufgebrachte Schicht hindurch an mindestens einem Punkt derselben gemessen wird, und daß diese Messung mit einem vorgegebenen Schwellenwert verglichen wird, um für den Fall, daß das Ergebnis des Vergleichs ungünstig ist, ein Warnsignal abzugeben.

2. Vorrichtung zum Durchführen des Verfahrens nach Anspruch 1, **dadurch gekennzeichnet, daß** sie eine Aufsprühstation (12) mit Mitteln umfaßt, um die Gleichmäßigkeit der aufgebrachten Schicht zu gewährleisten, indem die Gleichmäßigkeit des Durchsatzes des einem Sprühgerät zugeführten Produktes während des Aufsprühens kontrolliert wird, und im Falle des Feststeilens einer Ungleichmäßigkeit dieses Durchsatzes ein Warnsignal abgegeben wird, und daß sie eine Prüfstation (13) mit Mitteln umfaßt, um nach dem Aufsprühen die Abschirmungsleistung gegen ultraviolette Strahlung des aufgesprühten Überzuges (6) zu überprüfen, indem die Transmission von Infrarotstrahlung durch die aufgebrachte Schicht hindurch an mindestens einem Punkt derselben gemessen wird, und daß diese Messung mit einem vorgegebenen Schwellenwert verglichen wird, um für den Fall, daß das Ergebnis des Vergleiches ungünstig ist, ein Warnsignal abzugeben.

3. Vorrichtung nach Anspruch 2, **dadurch gekennzeichnet, daß** die Aufsprühstation (12) eine Sprühdüse (27) enthält, die am Ende einer Entnahmeleitung (26) eines geschlossenen Kreislaufes (20) angebracht ist, der in Reihe einen Speicher (21), eine Umlaufpumpe (22), eine erste gesteuerte Verschlußvorrichtung (23), eine Dosiereinrichtung (24), eine Abzweigung (25) der Entnahmeleitung (26) und eine zweite gesteuerte Verschlußvorrichtung (28) enthält, wobei die Entnahmeleitung (26) ferner mit einer gesteuerten Verschlußvorrichtung (26a) ausgestattet ist, die Dosiereinrichtung (24) aus einer Membranpumpe (32) mit Hydraulikantrieb gebildet ist, in der die Hubraumveränderung direkt proportional zu dem Hub eines Kolbens (36) des Hydraulikantriebes ist, und die Kontrolle des Durchsatzes der Düse durch ein Überwachungsorgan zum Überwachen der Geschwindigkeit des Förderhubes dieses Kolbens (36) durchgeführt wird.

4. Vorrichtung nach Anspruch 3, **dadurch gekennzeichnet, daß** der geschlossene Kreislauf (20) unter Druck gesetzt wird und daß der Kolben (36) des Hydraulikantriebs der Dosiereinrichtung (24) einer konstanten Rückstellkraft in Richtung der unteren Membran ausgesetzt wird, entgegen der Kraft, die auf die Membran von dem unter Druck gesetzten Produkt in dem geschlossenen Kreislauf ausgeübt wird, wenn die Sprühdüse isoliert ist.

5. Vorrichtung nach einem der Ansprüche 2 bis 4, **dadurch gekennzeichnet, daß** die Prüfstation (13) zur Überwachung des Überzuges einen Gabelträger (40) enthält, dessen zueinander beabstandete Zinken (41a, 41b) einen Raum zum Durchtritt für den überzogenen Rand der Fensterscheibe (19) festlegen, wobei einer der Zinken mit einem Infrarotstrahlungsimpulssender (43) ausgerüstet ist und der andere gegenüber dem Sender (43) mit einem Empfänger (44) zur Aufnahme von durch den Überzug durchgelassener Strahlung versehen ist.

6. Vorrichtung nach einem der vorhergehenden Ansprüche 2 bis 5, **dadurch gekennzeichnet, daß** sie aufgrund der ortfesten Lage jeder Station (12, 13) Mittel (15) zum Transport, zum Halten und zum Handhaben der Fensterscheibe zwischen den einzelnen Stationen und innerhalb jeder derselben hat.
